# EUROPÄISCHE PATENTSCHRIFT

(11) **EP 3 368 613 B1**
(45) Veröffentlichungstag und Bekanntmachung des Hinweises auf die Patenterteilung: **11.11.2020**
(21) Anmeldenummer: 16825320.1
(22) Anmeldetag: 26.10.2016
(51) Int. Cl.: C09C 1/36, C09D 7/00, C08K 3/22, C09D 1/00, C09D 7/42, C09D 7/61, C09D 7/62, C09D 7/40

(54) **MATTIERUNGSMITTEL UND VERFAHREN ZUR HERSTELLUNG**
THE PREPARATION OF MATT PAINTS AND PRINTING INKS
FABRICATION DE LAQUES MATES ET D'ENCRES D'IMPRIMERIE

(30) Priorität: 30.10.2015 EP 15003103
(43) Veröffentlichungstag der Anmeldung: 05.09.2018
(73) Patentinhaber: Kronos International, Inc., 51373 Leverkusen (DE)
(72) Erfinder: SIEKMAN, Janine, 51465 Bergisch Gladbach (DE); SANDROCK, Martin, 45270 Essen (DE); KOLMER-ANDERL, Nicole, 40764 Langenfeld (DE)
(86) Internationale Anmeldenummer: PCT/EP2016/001777
(87) Internationale Veröffentlichungsnummer: WO 2017/071805

(56) Entgegenhaltungen:
- EP-B1- 1 398 301
- DE-A1- 1 519 232
- DE-A1- 19 516 253
- DE-A1-102011 087 385

## Beschreibung

### Gebiet der Erfindung

Die Erfindung richtet sich auf Mattierungsmittel umfassend Agglomerate von anorganischen Pigmentpartikeln, ein Verfahren zur Herstellung solcher Mattierungsmittel sowie Beschichtungsformulierungen, die die hierin offenbarten Mattierungsmittel beinhalten. Des Weiteren betrifft die vorliegende Erfindung Kunststoff enthaltend diese Mattierungsmittel, pigmentierte matte Oberflächen und die Verwendung von Agglomeraten von anorganischen Pigmentpartikeln zur Mattierung von pigmentierten Beschichtungen.

### Technologischer Hintergrund der Erfindung

Oberflächen von Kunststoffen, Laminaten und Beschichtungen wie Lacke und Druckfarben werden herkömmlicherweise durch gezielte Aufrauhung im Mikrobereich mattiert. Das auf die aufgeraute Oberfläche einfallende Licht wird dadurch nicht gerichtet reflektiert, sondern diffus gestreut. Höhe, Form und Anzahl der Oberflächenstrukturen bestimmen den Glanzgrad der Beschichtung, des Lackfilms oder der Druckfarbe.

Zur Erzielung einer matten Oberfläche werden üblicherweise spezielle Mattierungsmittel zugesetzt. Solche Mattierungsmittel sind beispielsweise sphärische Partikel mit einer Partikelgröße im Bereich von 1 bis 20 µm in Abhängigkeit von der Filmschichtdicke. Weitere übliche Mattierungsmittel basieren auf gefällten oder pyrogenen Kieselsäuren sowie auf Kieselgelen, aber auch auf Duromeren, Wachsen oder Thermoplasten. Bekannt ist weiterhin die Eignung von Silikaten wie Diatomeenerde und kalzinierter Kaolin sowie Calciumcarbonat und verschiedenen Arten von Hohlkugeln.

EP 1 398 301 B1 offenbart Mattierungsmittel für Farben und Lacke basierend auf gefällten Kieselsäuren, die Partikelgrößen (d50) im Bereich von 5 bis 15 µm und eine spezifische Oberfläche (BET) von 350 bis 550 m²/g aufweisen. Optional sind die Kieselsäuren mit Wachs beschichtet.

Ferner beschreibt DE 195 16 253 A1 Mattierungsmittel auf Basis von sprühgetrocknetem Kieselgel. Um eine ausreichende Stabilität der Aggregate zu gewährleisten, wird ein Bindemittel wie Schichtsilikat, pyrogenes Siliciumdioxid oder organisches Polymer verwendet. Hierbei weist das Mittel eine Partikelgröße von 1 bis 20 µm und ein spezifisches Porenvolumen von 0,4 bis 2,5 mL/g auf.

JP 2002-338896 offenbart ein Mattierungsmittel, das Partikel mit einer bestimmten Verteilungsbreite und Porengröße umfasst.

Einen weiteren Ansatz matte Oberflächen zu erzielen, verfolgt US 2015/0044441, welche eine Folie mit mindestens zwei Lagen zum Bekleben einer Oberfläche beschreibt. Die eine Lage, die direkt auf der Oberfläche des zu beklebenden Substrats aufgebracht wird, weist klebende Eigenschaften auf, wobei die äußerste Schicht ein Mattierungsmittel aufweist. Das Mittel kann unter anderem Titandioxid und Siliciumdioxid sein und weist einen bevorzugten Durchmesser von 2,0 bis 6,0 µm auf.

Schließlich offenbart DE 1 519 232 A1 eine matte Beschichtung, die Pigmentagglomerate enthält, die durch Sprühtrocknung und abschließende Temperung von handelsüblichen Pigmenten zusammen mit Natriumsilikat als Bindemittel hergestellt werden. Die Agglomerate weisen einen Durchmesser von 2 bis 70 µm auf.

Titandioxidaggregate mit hoher mechanischer Beständigkeit werden in diversen technischen Gebieten eingesetzt. DE 10 2011 087 385 beschreibt die Verwendung solcher Aggregate mit einer Größe d50 von 5 bis 100 µm als Katalysator und Katalysatorträger, wobei die Aggregate Partikel mit einer Größe zwischen 50 bis 100 nm umfassen. US 6,413,490 B1 offenbart ebenfalls Granulate, die als Katalysatorträger aber auch in Farben Anwendung finden und die eine mittlere Größe von 10 bis 150 µm aufweisen. Die Granulate selbst umfassen Partikel mit einer Größe von 21 nm.

WO 98/50472 offenbart ein Titandioxidpigment, das mit feinteiligen, 7 bis 35 nm großen anorganischen Partikeln wie Kieselsäure oder Calciumcarbonat beschichtet ist, wobei die anorganischen Partikel das einfallende Licht nicht absorbieren und nicht mit weiteren Komponenten in der Endanwendung wechselwirken. Das Pigment wird in verschiedenen Polymeren eingearbeitet und ist insbesondere vorteilhaft bei der Anwendung in Polymeren mit einem erhöhten PVC Gehalt.

US 2,721,787 offenbart staubfreie Titandioxidaggregate mit einem Durchmesser von 30 bis 140 um. Diese werden bei keramischen Fritten eingesetzt.

Herkömmliche Mattierungsmittel werden in Beschichtungsformulierungen eingearbeitet. Diese werden auf Substrate aufgetragen, um deren Oberfläche zu mattieren. Aufgrund der enthaltenen üblichen Mattierungsmittel weisen die Formulierungen bei ihrer Herstellung und Handhabung erhebliche Nachteile auf. So neigen etablierte Mittel unter anderem zur Staubbildung. Ferner werden bei der Einarbeitung in Beschichtungsformulierungen die Mittel mechanisch zerkleinert. Dies führt zu einem signifikanten Viskositätsanstieg der Formulierung, die die Herstellung, Handhabung sowie die Verarbeitung erschwert. Des Weiteren sind die herkömmlichen Mattierungsmittel enthaltenen Beschichtungen chemisch unbeständig, schmutzanfällig und weisen geringen Abriebwiderstand auf. Dies führt zu einem schnellen Verschleiß und unästhetischem Erscheinen der mattierten Substratoberfläche.

Daher besteht das Bedürfnis nach einem Mattierungsmittel zur Mattierung pigmentierter Oberflächen, das die Nachteile des Standes der Technik zumindest teilweise überwindet.

### Aufgabenstellung und Kurzbeschreibunq der Erfindung

Der Erfindung liegt die technische Aufgabe zugrunde, ein Mattierungsmittel zur Herstellung von pigmentierten matten Oberflächen bereitzustellen, mit welchem zumindest ein Teil der Nachteile der Mittel des Stands der Technik überwunden werden kann.

Die technische Aufgabe wird durch ein Mattierungsmittel zur Herstellung von pigmentierten matten Oberflächen gelöst, das Agglomerate von anorganischen Pigmentpartikeln umfasst, das dadurch gekennzeichnet ist, dass die Agglomerate eine mittlere Agglomeratgröße d50 von 2 bis 200 µm, bevorzugt 2 bis 100 µm, besonders bevorzugt 2 bis 50 µm und am bevorzugtesten 2 bis 20 µm und eine spezifische Oberfläche (BET) von 5 bis 50 m²/g aufweisen.

Das erfindungsgemäße Mattierungsmittel weist exzellente Mattierungseigenschaften auf. Durch die Einarbeitung des Mittels ändert sich die Viskosität der Beschichtungsformulierung unmerklich, so dass die das Mittel enthaltene Formulierung leicht hergestellt, handhabbar sowie anwendbar ist. Ohne an eine bestimmte naturwissenschaftliche Theorie gebunden sein zu wollen, wird davon ausgegangen, dass herkömmliche Mattierungsmittel beim Einarbeiten in kleinste Teilchen im einstelligem Nanometerbereich mechanisch zerkleinert werden. Dies bewirkt eine signifikante Viskositätssteigerung der Formulierung. Im Gegensatz hierzu werden bei der vorliegenden Erfindung Agglomerate eingesetzt, die anorganische Pigmentpartikel im mittleren Größenbereich von 0,1 bis 1 µm umfassen. Bei der Einarbeitung in die Formulierung werden die Agglomerate zu einem geringen Anteil in ihre anorganische Pigmentpartikel zerkleinert. Diese Pigmentpartikel bewirken jedoch keinen signifikanten Viskositätsanstieg und ermöglichen somit eine einfache Einarbeitung. Die Formulierungen können auf Oberflächen jeglicher Art aufgebracht und gehärtet werden. Titandioxid-Pigmentpartikel und deren Agglomerate enthaltende Beschichtungen weisen im Vergleich zu üblichen Mattierungsmittel enthaltenden Beschichtungen eine verbesserte chemische Beständigkeit, Abriebwiderstandsfähigkeit sowie Anschmutzbeständigkeit auf.

Daher richtet sich in einem ersten Aspekt die Erfindung auf ein Mattierungsmittel zur Herstellung von pigmentierten matten Oberflächen, wobei das Mittel Agglomerate von anorganischen Pigmentpartikeln umfasst und die Agglomerate dadurch gekennzeichnet sind, dass diese eine mittlere Agglomeratgröße d50 von 2 bis 200 µm, bevorzugt 2 bis 100 µm, besonders bevorzugt 2 bis 50 µm und am bevorzugtesten 2 bis 20 µm und eine spezifische Oberfläche (BET) von 5 bis 50 m²/g aufweisen.

In einem weiteren Aspekt betrifft die Erfindung ein Verfahren zur Herstellung eines solchen Mattierungsmittels, welches Agglomerate von anorganischen Pigmentpartikeln umfasst und dadurch gekennzeichnet ist, dass die anorganischen Pigmentpartikel mittels Granulieren, Sintern, Formpressen oder Dispergieren und anschließendem Trocknen agglomeriert werden, bevorzugt mittels Dispergieren und anschließendem Trocknen.

In einem anderen Aspekt richtet sich die Erfindung auf Mattierungsmittel zur Herstellung von pigmentierten matten Oberflächen, welches dadurch gekennzeichnet ist, dass das Mattierungsmittel erhältlich nach einem hierin offenbarten Verfahren ist.

In einem weiteren Aspekt betrifft die Erfindung eine Beschichtungsformulierung zur Herstellung von pigmentierten matten Oberflächen, welche dadurch gekennzeichnet ist, dass die Formulierung ein hierin beschriebenes Mattierungsmittel umfasst.

In einem noch anderen Aspekt betrifft die Erfindung eine pigmentierte matte Oberfläche eines Substrats, dadurch gekennzeichnet, dass die Oberfläche mit einer Beschichtungsformulierung wie hierin offenbart beschichtet ist.

In einem weiteren Aspekt richtet sich die Erfindung auf eine pigmentierte matte Oberfläche, die dadurch gekennzeichnet ist, dass die pigmentierte matte Oberfläche die Oberfläche eines Kunststoffes, Laminats oder einer Beschichtung ist und auf diese eine erfindungsgemäße Beschichtungsformulierung aufgebracht und ausgehärtet wird.

In einem noch weiteren Aspekt betrifft die Erfindung einen Kunststoff, der das erfindungsgemäße Mattierungsmittel umfasst.

Schließlich betrifft in einem anderen Aspekt die Erfindung die Verwendung von Agglomeraten von anorganischen Pigmentpartikeln zur Mattierung von pigmentierten Beschichtungen, wobei die Verwendung dadurch gekennzeichnet ist, dass die Agglomerate eine mittlere Agglomeratgröße d50 von 2 bis 200 µm, bevorzugt 2 bis 100 µm, besonders bevorzugt 2 bis 50 µm und am bevorzugtesten 2 bis 20 µm und eine spezifische Oberfläche (BET) von 5 bis 50 m²/g aufweisen.

Weitere vorteilhafte Ausführungen der Erfindung sind in den Unteransprüchen angegeben.

### Figuren

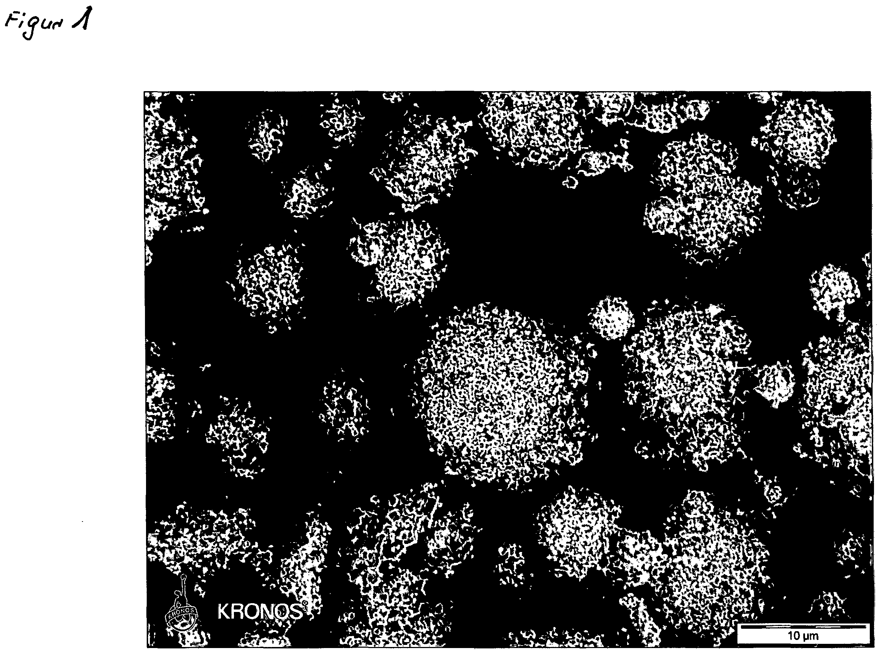

Figur 1: Rasterelektronenmikroskopaufnahme des erfindungsgemäßen Pigments gemäß Beispiel 2a.

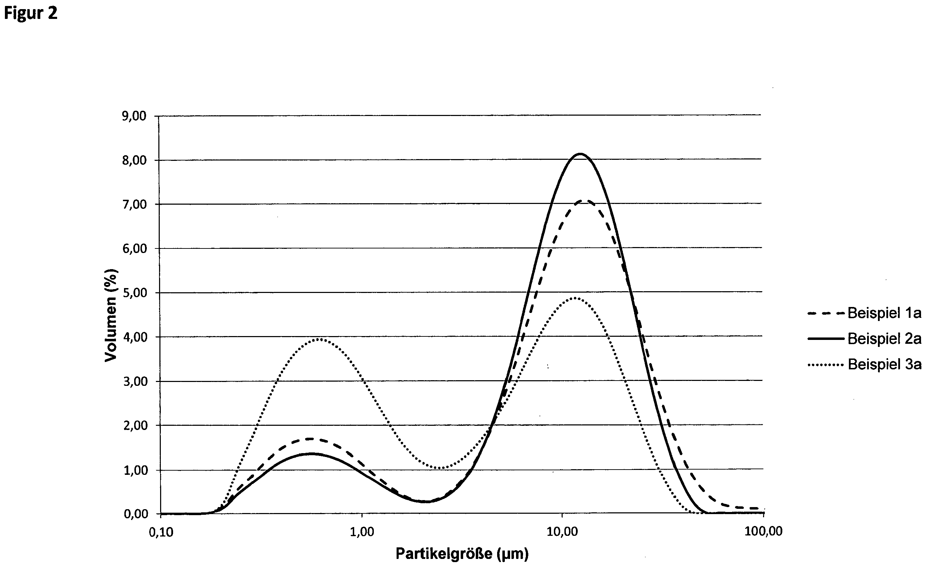

Figur 2: Laserbeugungsanalyse der erfindungsgemäßen Pigmente gemäß Beispiel 1a, 2a und 3a.

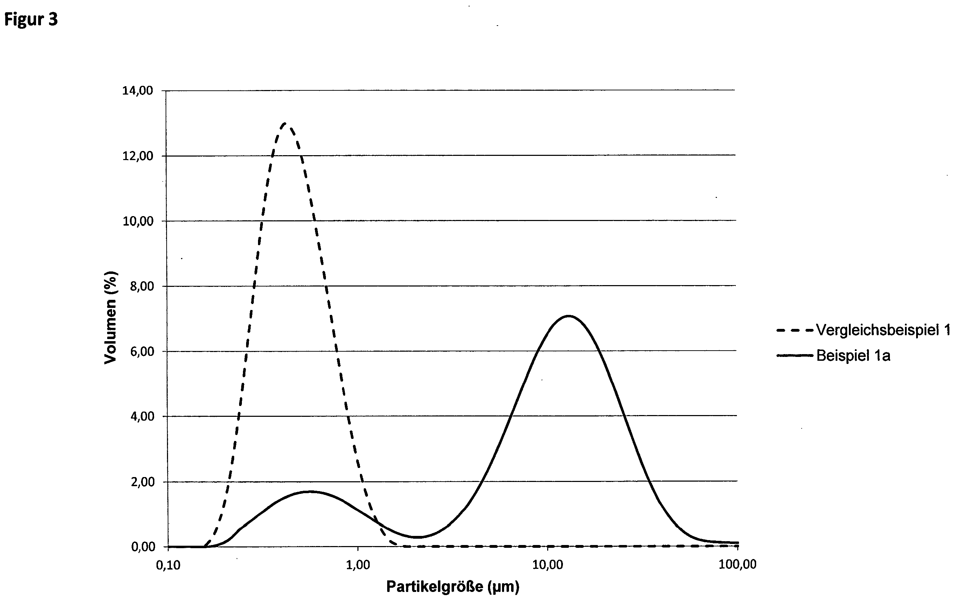

Figur 3: Laserbeugungsanalyse der Pigmente gemäß Beispiel 1a und Vergleichsbeispiel 1.

### Beschreibung der Erfindung

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Numerische Bereiche, die in dem Format "von x bis y" angegeben sind, schließen die genannten Werte ein sowie die Werte, die im Bereich der dem Fachmann bekannten jeweiligen Messgenauigkeit liegen. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Alle Prozentangaben, die im Zusammenhang mit den hierin beschriebenen Zusammensetzungen gemacht werden, beziehen sich, sofern nicht explizit anders angegeben, auf Gew.-%, jeweils bezogen auf die betreffende Mischung bzw. Zusammensetzung.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. Zusammen mit Gewichtsangaben bezieht sich die Angabe auf alle Verbindungen der angegebenen Art, die in dem Mattierungsmittel, Beschichtungsformulierung, Kunststoff usw. enthalten sind, d.h., dass die Mattierungsmittel, Beschichtungsformulierung, Kunststoff usw. über die angegebene Menge der entsprechenden Verbindungen hinaus keine weiteren Verbindungen dieser Art enthält.

Unter der mittleren Agglomerat- oder Partikelgröße wird im Rahmen der Erfindung der massebezogene Median d50 (im Folgenden: d50) verstanden. Die Partikelgrößenverteilung und der massebezogene Median d50 wurde mittels Laserbeugung wie hierin beschrieben ermittelt.

"Pigment", wie hierin verwendet, bezieht sich auf gemäß DIN 55 943 im Anwendungsmedium praktisch unlösliche anorganische oder organische Farbmittel, die in dem Anwendungsmedium weder chemisch noch physikalisch verändert werden und ihre partikuläre Struktur behalten. Sie werden zur Farbgebung eingesetzt, welche auf einer Interaktion der Pigmentpartikel mit dem sichtbaren Licht durch Absorption und Remission beruht. Pigmentpartikel weisen üblicherweise eine mittlere Partikelgröße (d50) im Bereich von 0,1 bis 1 µm auf.

Das hierin offenbarte Mattierungsmittel umfasst Agglomerate von anorganischen Pigmentpartikeln. Diese Agglomerate weisen eine mittlere Agglomeratgröße d50 von 2 bis 200 µm, bevorzugt von 2 bis 100 µm, besonders bevorzugt von 2 bis 50 µm und am bevorzugtesten von 2 bis 20 µm und eine spezifische Oberfläche (BET) von 5 bis 50 m²/g auf. Bevorzugt weisen die Agglomerate eine spezifische Oberfläche (BET) von 10 bis 30 m²/g, besonders bevorzugt von 11 bis 25 m²/g und am bevorzugtesten von 13 bis 20 m²/g auf. Die Oberfläche wurde nach dem statisch volumetrischen Prinzip nach DIN 66 131 ermittelt. Beschichtungen, die Agglomerate mit geringer spezifischer Oberfläche enthalten, weisen eine hohe Anschmutzbeständigkeit auf und sind somit besonders vorteilhaft, wenn diese Schmutz ausgesetzt sind. Insbesondere für Ablageflächen, die mit Speisen und Getränken wie Tee oder Kaffee in Kontakt treten, wie Einrichtungsgegenstände für den Innen- und Außenbereich, sind solche Agglomerate mit geringer spezifischer Oberfläche geeignet.

Als anorganisches Pigmentpartikel ist jedes im Stand der Technik bekannte und für den erfindungsgemäßen Zweck geeignete anorganische Pigment einsetzbar. Es können auch Mischungen verschiedener anorganischer Pigmente verwendet werden.

Das erfindungsgemäße anorganische Pigment ist bevorzugt ein Metallsalz und noch bevorzugter ein Metalloxid. "Metallsalz", wie hierin verwendet, bezieht sich auf die allgemein gültige Definition dieses Begriffs und ist ein Salz, das mindestens ein Metallkation und mindestens ein Anion umfasst. "Metalloxid", wie hierin verwendet, bezieht sich auf die allgemein gültige Definition dieses Begriffs und ist eine Verbindung, die mindestens ein Metallatom und mindestens ein Sauerstoffatom umfasst.

Geeignete anorganische Pigmente sind, ohne auf diese beschränkt zu sein, Weißpigmente, wie Titandioxid (C.I. Pigment White 6), Zinkweiß, Farbenzinkoxid; Zinksulfid, Lithopone; Schwarzpigmente, wie Eisenoxidschwarz (C.I. Pigment Black 11), Eisen-Mangan-Schwarz, Spinell-schwarz (C.I. Pigment Black 27); Ruß (C.I. Pigment Black 7); Buntpigmente, wie Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultramarinblau; Manganblau; Ultramarinviolett; Kobalt- und Manganviolett; Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot; Eisenoxidbraun (C.I. Pigment Brown 6 und 7), Mischbraun, Spinell- und Korundphasen (C.I. Pigment Brown, 29, 31, 33, 34, 35, 37, 39 und 40), Chromtitangelb (C.I. Pigment Brown 24), Chromorange; Cersulfid (C.I. Pigment Orange 75); Eisenoxidgelb (C.I. Pigment Yellow 42); Nickeltitangelb (C.I. Pigment Yellow 53 ; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34) sowie Bismutvanadat (C.I. Pigment Yellow 184).

Ferner können ebenfalls anorganische Pigmentpartikel eingesetzt werden, die herkömmlicherweise als Füllstoffe eingesetzt werden, wie Aluminiumoxid, Aluminiumhydroxid, Zinksulfid, natürliche und gefällte Kreide und Bariumsulfat.

Vorzugsweise ist das Pigmentpartikel ausgewählt aus der Gruppe bestehend aus Magnesiumcarbonat, Bariumsulfat, Titandioxid, Zinkoxid, Zinksulfid, Huntit, Bleiweiß, Lithopone, Cristobalit, Kaolin und Mischungen davon. Am bevorzugtesten ist auf Grund seiner Pigmenteigenschaften sowie seiner hohen Mohsschen Härte von allen hierin offenbarten Pigmentpartikeln Titandioxid. Titandioxid kann hierbei in den Kristallstrukturen Rutil, Anatas oder Brookit vorliegen, üblicherweise in der Kristallstruktur Rutil oder Anatas. Rutil ist aufgrund der geringeren photolytischen Katalyseaktivität im Vergleich zu Anatas besonders geeignet.

Des Weiteren kann das anorganische Pigmentpartikel anorganisch und/oder organisch nachbehandelt sein. Hierbei wird das Partikel mit anorganischen bzw. organischen Substanzen in Kontakt gebracht. Solche Substanzen und Techniken sind im Stand der Technik etabliert. Zu den anorganischen Substanzen zählen unter anderem Siliciumdioxid und Aluminiumoxid. In einer bevorzugten Ausführungsform ist das Partikel anorganisch nachbehandelt.

Wie bereits erwähnt, ist als anorganisches Pigmentpartikel Titandioxid am bevorzugtesten ausgewählt. Das hierin offenbarte Titandioxid kann nach dem Sulfatverfahren oder nach dem Chloridverfahren hergestellt worden sein. Dieses ist bevorzugt ausgewählt aus der Gruppe bestehend aus unbehandeltem Titandioxid-Pigment, nachbehandeltem nicht-mikronisierten Titandioxid-Pigment, Titandioxid-Fertigpigment und Mischungen davon. "Nachbehandelt", wie hierin verwendet, bezieht sich auf mindestens einen weiteren Verfahrensschritt, der nach der Herstellung des Pigments bzw. des Rohpigments durchgeführt wird. Solche Verfahrensschritte sind im Stand der Technik wohl etabliert. Hierzu gehören beispielsweise das Sandmahlen, Aufbringen von Schichten auf das anorganische Pigment bzw. das Rohpigment,

Waschen, Trocknen, Dampfmahlen oder Kombinationen dieser Schritte. Bei einer herkömmlichen Nachbehandlung wird das Rohpigment zunächst einer Sandmahlung, einer optionalen anorganischen Modifikation mit Siliciumdioxid und Aluminiumoxid, einer Waschung, einer Trocknung und schließlich einer Dampfmahlung unterzogen. Die Nachbehandlung dient der Verbesserung der physikalischen, insbesondere der optischen, und chemischen Eigenschaften des Partikelpigments bzw. des Agglomerats und kann der jeweiligen spezifischen Verwendung des fertigen Pigments, beispielsweise der jeweiligen Beschichtungsformulierung angepasst werden. In verschiedenen Ausführungsformen ist das Titandioxid mit Siliciumdioxid und/oder mit Aluminiumoxid nachbehandelt. So kann das Titandioxid zunächst mit Siliciumdioxid und anschließend mit Aluminiumoxid nachbehandelt sein. Diese Nachbehandlung sowie Substanzen und Techniken, die hierfür verwendet werden, sind im Stand der Technik wohl bekannt. Nachbehandelte Pigmente werden im Stand der Technik auch als gefinishte Pigmente bezeichnet. "Unbehandelt", wie hierin definiert, bezieht sich folglich auf das Pigmentpartikel bzw. das Rohpigment. So kann das Titandioxid als Rohpigment nach dem Sulfatverfahren erfindungsgemäß verwendet werden. Dieses kann getrocknet, vorzugsweise sprühgetrocknet werden oder falls notwendig vor dem Trocknen mit Lösungsmittel dispergiert werden.

Die Einstellung der Teilchengröße kann mittels etablierter Verfahren, wie beispielsweise Mahlung, oder mittels Wahl bestimmter Bedingungen während der Pigmentherstellung erfolgen.

Vorzugsweise weist das anorganische Pigmentpartikel eine mittlere Partikelgröße d50 von 100 bis 1000 nm, besonders bevorzugt von 200 bis 500 nm auf.

Ferner weisen die Agglomerate einen Ölabsorptionswert gemessen nach DIN ISO 787 Teil 5 bevorzugt von 15 bis 25 g/100g, besonders bevorzugt von 17 bis 22 g/100g auf.

Die erfindungsgemäßen Agglomerate der anorganischen Pigmentpartikel können nach jedem im Stand der Technik offenbarten Verfahren hergestellt werden. Vorzugsweise werden die anorganischen Pigmentpartikel mittels Granulieren, Sintern, Formpressen oder Dispergieren mit anschließendem Trocknen agglomeriert. Besonders bevorzugt werden die anorganischen Pigmentpartikel zunächst dispergiert und anschließend getrocknet. Das Dispergieren kann ebenfalls nach allen herkömmlichen Verfahren durchgeführt werden, die hierfür geeignet sind. Hierzu können die Pigmentpartikel mit einem Lösungsmittel versetzt werden, wobei Wasser, organische Lösungsmittel oder Mischung davon verwendet werden können. Geeignete organische Lösungsmittel sind alle im Stand der Technik bekannten und für den erfindungsgemäßen Zweck geeignete organische Lösungsmittel, insbesondere polar-protischen und polar-aprotischen Lösungsmittel. Hierzu zählen, ohne auf diese beschränkt zu sein, Alkohole wie Isopropanol, n-Propanol, sowie Aceton, Ethylacetat, Ethylmethylketon, Tetrahydrofuran (THF) und Dimethylysulfoxid (DMSO). Ferner können auch kurzkettige Alkane wie Pentan oder Heptan eingesetzt werden. Des Weiteren kann ein übliches Dispergiermittel wie das kommerziell erhältliche Tegomer DA 640, Trimethylolpropan (TMP), Octyltrichlorsilan (OCTCS), Octyltriethoxysilan (OCTEO) oder Etidronsäure zugegeben werden. Das Dispergieren kann mittels üblicher Verfahren und Techniken durchgeführt werden, beispielsweise in einem mit einem üblichen Rührwerk ausgestattetem Behälter. Vorzugsweise wird das Dispergieren der Pigmentpartikel in einer Rührwerkskugelmühle durchgeführt. Hierfür können beispielsweise Zirkonoxid-Mahlperlen mit einer Größe von 0,4 bis 0,6 mm verwendet werden und mit einer Drehzahl von 3000 rpm für 15 bis 30 min im Kreislauf gemahlen werden.

Die anschließende Trocknung kann mit Hilfe jedes im Stand der Technik bekannten Verfahren und Technik durchgeführt werden. Hierzu sind, ohne auf diese beschränkt zu sein, Bandtrockner, Etagentrockner, Drehtrockner und Sprühtrockner geeignet. Vorzugsweise wird die Dispersion mittels Sprühtrocknung getrocknet. Die Trocknungsbedingungen werden so gewählt, dass Agglomerate in den hierin offenbarten Größenbereichen entstehen. Optional können mittels etablierter Trennungsverfahren Agglomerate mit einer engeren Größenverteilung erreicht werden. Die Agglomerate können auch mittels üblicher Techniken zerkleinert werden, um die hierin offenbarten Größen zu erzielen. Hierzu zählen, ohne auf diese beschränkt zu sein, das Mahlen beispielsweise mit einer Prallmühle.

Ebenfalls beansprucht sind die nach dem hierin beschriebenen Verfahren erhältlichen Mattierungsmittel.

Ein weiterer Gegenstand der vorliegenden Erfindung sind Beschichtungsformulierungen zur Herstellung pigmentierter matter Oberflächen, die die hierin beschriebenen Mattierungsmittel enthalten. Das Mittel kann in einer Menge von 0,1 bis 98 Gew.-%, bevorzugt 1 bis 50 Gew.-%, besonders bevorzugt 2 bis 25 Gew.-% und am bevorzugtesten 3 bis 23 Gew.-% bezogen auf das Gesamtgewicht der Beschichtungsformulierung in der Beschichtungsformulierung enthalten sein. Optional können diese Formulierungen ferner Pigment umfassen. In einer bevorzugten Ausführungsform weisen diese Pigmente die gleiche Zusammensetzung wie die Pigmente der Agglomerate auf, in anderen Worten, die Zusammensetzung der Pigmente und der Pigmente der Agglomerate sind identisch. Des Weiteren bevorzugt weist die Formulierung kein zusätzliches nicht-agglomeriertes Pigment auf.

Die Formulierung kann neben dem erfindungsgemäßen Mattierungsmittel übliche Mattierungsmittel aufweisen. Vorzugsweise weist die Formulierung keine weiteren Mattierungsmittel auf.

Vorzugsweise enthält die Formulierung übliche Bestandteile. Als Bestandteil können alle im Stand der Technik bekannten Bestandteile eingesetzt werden, die für den erfindungsgemäßen Zweck geeignet sind. Vorzugsweise umfasst die Formulierung mindestens einen Bestandteil ausgewählt aus der Gruppe bestehend aus Bindemittel, Entschäumer, Dispergiermittel, Füllstoff, Lösungsmittel, Konservierungsmittel, Filmhilfsmittel, sowie Rheologiehilfsmittel. Zu den Konservierungsmitteln zählen auch übliche Fungizide. Zu den Beschichtungsformulierungen zählen Lacke, Farben und Druckfarben.

Ein anderer Gegenstand der vorliegenden Erfindung ist eine pigmentierte matte Oberfläche eines Substrats, wobei die Oberfläche dadurch gekennzeichnet ist, dass diese Oberfläche mit einer hierin offenbarten Beschichtungsformulierung beschichtet ist. Die Formulierungen können als etablierte 1K-, 2K- und Mehrkomponenten-Lacke in den üblichen Zusammensetzungen vorliegen. Die Lacke werden mittels üblichen Techniken und Verfahren auf das Substrat aufgebracht und in Abhängigkeit des Lackzusammensetzung, insbesondere des Bindemittels, gehärtet, beispielsweise mittels UV-Bestrahlung oder Trocknung. Zu den Substraten gehören, ohne auf diese beschränkt zu sein, Holz, Kunststoffe, Metalle, Papier, Glasgewebe und Mischungen davon.

Ein noch anderer Gegenstand der Erfindung ist ein Kunststoff, welcher dadurch gekennzeichnet ist, das der Kunststoff ein erfindungsgemäßes Mattierungsmittel umfasst. Als Kunststoff ist jeder im Stand der Technik bekannte und für den erfindungsgemäßen Zweck geeignete Kunststoff einsetzbar. "Kunststoff", wie hierin verwendet, bezieht sich auf einen Werkstoff, der mindestens 50 Gew.-% eines Polymers enthält, bezogen auf das Gesamtgewicht des Kunststoffs. Das Polymer kann ein Homopolymer, ein Copolymer oder ein Pfropfpolymer sein. Des Weiteren kann das Polymer ataktisch, isotaktisch oder syndiotaktisch sein Poylmer sein. Ferner ist der Kunststoff ein Thermoplast, ein Elastomer, ein Duroplast oder ein thermoplastisches Elastomer, bevorzugt ein Thermoplast. Das Polymer ist, ohne auf diese beschränkt zu sein, ausgewählt aus der Gruppe bestehend aus Polyolefinen, Polystyrol, Polyamid, Polyketon, Polyester, Polyurethan, Poly(meth)acrylat und Mischungen davon. Das Polyolefin ist, ohne auf diese beschränkt zu sein, ausgewählt aus der Gruppe bestehend aus Polyethylen, Polypropylen, Polybutylen sowie Mischungen davon. Das Mattierungsmittel kann mittels bekannter Techniken und Verfahren in den Kunststoff eingearbeitet werden beispielsweise mittels Extrudieren. Das Mattierungsmittel ist in den üblichen Mengen im Kunststoff verarbeitet. So weist der erhaltene Kunststoff 0,1 bis 30 Gew.-%, bevorzugt 1 bis 25 Gew.-% des erfindungsgemäßen Mittels bezogen auf das Gesamtgewicht des Kunstoffs auf.

Schließlich ist ein weiterer Gegenstand der Erfindung die Verwendung von Agglomeraten von anorganischen Pigmentpartikeln zur Mattierung von pigmentierten Beschichtungen dadurch gekennzeichnet, dass die Agglomerate eine mittlere Agglomeratgröße d50 von 2 bis 200 µm, bevorzugt 2 bis 100 µm, besonders bevorzugt 2 bis 50 µm und am bevorzugtesten 2 bis 20 µm und eine spezifische Oberfläche (BET) von 5 bis 50 m²/g aufweisen.

In einer weiteren Ausführung der Erfindung können als Pigmentzusammensetzungen auch Pigmentmischungen zum Einsatz kommen, in denen beispielsweise ein übliches Pigment, das glänzende Oberflächen liefert, gemischt ist mit Pigmentagglomeraten.

Die erfindungsgemäße Pigmentzusammensetzung enthält Agglomerate der anorganischen Pigmentpartikel. In der fertigen Beschichtung liegt die Pigmentzusammensetzung sowohl in Form von anorganischen Pigmentpartikel-Agglomeraten, die für die angestrebte Oberflächenrauigkeit sorgen, als auch in Form gut dispergierbarer anorganischer Pigmentpartikel, die den klassischen Anforderungen an ein Pigment entsprechen, vor.

Die Erfindung beruht auf Pigmentzusammensetzung in Beschichtungen wie Lacken, Farben und Druckfarben, welche sowohl als Mattierungsmittel als auch als Pigment fungiert, so dass der Einsatz eines zusätzlichen Mattierungsmittel zur Erzeugung mattierter Oberflächen entfallen kann.

### Testmethoden

### Partikelgrößenverteilung und massebezogener Median d50

Die Partikelgrößenverteilung und der massebezogene Median d50 wurde mittels Laserbeugung mit dem Mastersizer 2000 der Firma Malvern ermittelt. Für die Messung wurde eine Suspension aus Calgon-Lösung (80 mL, 0,06 % in destilliertem Wasser) mit dem zu untersuchenden Partikelmaterial (2 g) für 60 s mit einem Ultraturrax-Rührer bei 9500 rpm dispergiert.

Die Messung wurde bei folgenden Geräteeinstellungen durchgeführt:
Brechungsindex (n) Medium (Wasser): 1,33,
Brechungsindex (n) Titandioxid (Rutil): 2,741 (im roten Laser) und 2,960 (im blauen Licht);
Brechungsindex (n) Titandioxid (Anatas): 2,550 (im roten Laser) und 2,500 (im blauen Licht);
Absorptionsindex (k) Titandioxid (Rutil): 0,08 (im roten Laser) und 0,08 (im blauen Licht);
Absorptionsindex (k) Titandioxid (Anatas): 0,07 (im roten Laser) und 0,08 (im blauen Licht);
Laserabschattung: 0,8 %;
Wellenlänge der Lichtquellen: Rot: 633 nm; Blau: 466 nm.

### KE-Viskosität (Topfviskosität)

Die KE-Viskosität des frischen Lacks wurde mit einem Krebs-Stormer-Viskosimeter (KU-2 Viscosimeter) der Firma Brookfield ermittelt. Das Ergebnis wird in der Einheit Krebs angegeben.

### Ölabsorption

Es wird die Menge Leinöl bestimmt, die zur vollständigen Benetzung des zu untersuchenden Partikelmaterials (100 g) erforderlich ist. Die Durchführung der Methode erfolgt gemäß DIN ISO 787 Teil 5.

### Spezifische Oberfläche (BET)

Die BET-Oberfläche wird mit einem Tristar 3000 der Firma Micromeritics nach dem statisch volumetrischen Prinzip nach DIN 66 131 ermittelt gemessen.

### Beispiele

### Beispiel 1a

Ein Titandioxidpigment-Grundkörper in der Rutil Kristallmodifikation wurde mit Al₂O₃ nachbehandelt, filtriert, gewaschen, abgetrennt und getrocknet, jedoch nicht mikronisiert, und anschließend zu einer wässrigen Suspension mit TiO₂ (2,5 kg) in Wasser (3,25 L) erneut angeteigt. Die Suspension wurde in einer Rührwerkskugelmühle Labstar (0,4 bis 0,6 mm SiLi-Beads Typ ZY) 16 min im Kreislaufverfahren mit einem spezifischen Energieeintrag von 0,2 kWh/kg dispergiert. Anschließend wurde die Suspension in einem Sprühtrockner (Büchi Mini-Sprühtrockner B-290) getrocknet.

Die Sprühtrockneragglomerate wiesen eine Partikelgröße d50 von 10 µm, eine spezifische Oberfläche (BET) von 16 m²/g und eine Ölabsorption von 20 g/100g auf.

### Beispiel 1b

Mit dem sprühgetrockneten Pigment aus Beispiel 1a wurde ein wässriger Dispersionslack (Pigment-Volumen-Konzentration PVK 19%) nach folgender Vorschrift hergestellt:
Zunächst wurde eine Vorlösung mit den Komponenten gemäß Tabelle 1 und mit Hilfe eines Dissolvers hergestellt. Anschließend wurden die Vormischung (192,50 g) mit Titandioxidpigment (57,50 g), das gemäß Beispiel 1a) erhalten wurde, in einem Skandex-Mischer unter Zugabe von Glasperlen (50 g, SiLi-Beads Typ S) für eine Dauer von 30 Minuten gemischt.

**Tabelle 1: Vorlösung**

| Bestandteil | | Menge [g] |
|---|---|---|
| Wasser | | 36,50 |
| Entschäumer | Agitan E255 | 1,00 |
| Fungizid/Algizid | Actizid MBS | 0,50 |
| Dispergiermittel | Dispex CX4320 | 2,50 |
| Dispergiermittel | Edaplan 480 | 2,50 |
| Verdicker | Rheolate 644 | 2,50 |
| Bindemittel | Acronal LR9014 | 147,0 |
| | Summe | 192,50 |

An der frischen Lackmischung wurde die KE-Viskosität (Topfviskosität) bestimmt. Zur Bestimmung des Glanzes wurde ein Aufzug auf schwarz-weißem Kontrastkarton hergestellt und anschließend der Glanz (20°, 60°, 85°) mit einem Haze-Gloss Reflektometer der Firma Byk-Gardner gemessen. Die gemessenen Daten sind der Tabelle 2 zu entnehmen.

### Beispiel 2a

Es wurden Sprühtrockneragglomerate wie in Beispiel 1a hergestellt, mit dem Unterschied, dass zu der Suspension in der Rührwerkskugelmühle das Dispergiermittel Tegomer DA 640 (25 g) hinzugegeben wurde.

Die Sprühtrockneragglomerate wiesen eine Partikelgröße d50 von 10 µm, eine spezifische Oberfläche (BET) von 13,8 m²/g und eine Ölabsorption von 19,6 g/100g auf.

### Beispiel 2b

Es wurde ein wässriger Dispersionslack wie in Beispiel 1b hergestellt und die KE-Viskosität sowie der Glanz (20°, 60°, 85°) wie in Beispiel 1b bestimmt. Die gemessenen Daten sind Tabelle 2 zu entnehmen.

### Beispiel 3a

Es wurden Sprühtrockneragglomerate wie in Beispiel 2a hergestellt mit dem Unterschied, dass das Pigment nicht in Wasser (3,25 L), sondern in Ethanol/Ethylacetat (3,25 L, Verhältnis 1,6 : 1) erneut angeteigt wurde.

Die Sprühtrockneragglomerate wiesen eine Partikelgröße d50 von 4 µm, eine spezifische Oberfläche (BET) von 13,5 m²/g und eine Ölabsorption von 20 g/100 g auf.

### Beispiel 3b

Es wurde ein wässriger Dispersionslack wie in Beispiel 1b hergestellt und die KE-Viskosität sowie der Glanz (20°, 60°, 85°) wie in Beispiel 1b bestimmt. Die gemessenen Daten sind der Tabelle 2 zu entnehmen.

### Vergleichsbeispiel 1

Vergleichsbeispiel 1 beinhaltet die Herstellung eines wässrigen Dispersionslacks, wie sie in Beispiel 1b beschrieben ist, wobei anstelle des sprühgetrockneten Pigments gemäß Beispiel 1a ein mit Al₂O₃ nachbehandeltes Titandioxidpigment in der Rutil Kristallmodifikation eingesetzt wurde, kommerziell unter dem Produktnamen Kronos 2066 von KRONOS INTERNATIONAL, INC. Es wurden die KE-Viskosität sowie der Glanz (20°, 60°, 85°) wie in Beispiel 1b ermittelt. Die gemessenen Daten sind Tabelle 2 zu entnehmen.

### Vergleichsbeispiel 2

Vergleichsbeispiel 2 beinhaltet die Herstellung eines wässrigen Dispersionslacks, wie sie in Vergleichsbeispiel 1 beschrieben ist, mit dem Unterschied, dass in die Vorlösung (siehe Tabelle 1) zusätzlich das kommerzielle Mattierungsmittel Acematt TS100 (8,82 g, entsprechend 6 Gew.-% bezogen auf Bindemittel) gegeben wurde. Es wurden die KE-Viskosität sowie der Glanz (20°, 60°, 85°) wie in Beispiel 1b bestimmt. Die gemessenen Daten sind Tabelle 2 zu entnehmen.

### Vergleichsbeispiel 3

Vergleichsbeispiel 3 beinhaltet die Herstellung eines wässrigen Dispersionslacks, wie sie in Vergleichsbeispiel 2 beschrieben ist, mit dem Unterschied, dass als kommerzielles Mattierungsmittel Syloid W500 (8,82 g, entsprechend 6 Gew.-% bezogen auf Bindemittel) eingesetzt wurde. Es wurden die KE-Viskosität sowie der Glanz (20°, 60°, 85°) wie in Beispiel 1b bestimmt. Die gemessenen Daten sind Tabelle 2 zu entnehmen.

**Tabelle 2: Wässriger Dispersionslack**

| | Glanz 20° | Glanz 60° | Glanz 85° | KE-Viskosität [Krebs] |
|---|---|---|---|---|
| Beispiel 1b | 0 | 14 | 21 | 120 |
| Beispiel 2b | 0 | 10 | 12 | 119 |
| Beispiel 3b | 8 | 42 | 68 | 122 |
| Vergleichsbeispiel 1 | 47 | 75 | 95 | 121 |
| Vergleichsbeispiel 2 | 26 | 64 | 88 | 140 |
| Vergleichsbeispiel 3 | 11 | 52 | 76 | 127 |

Die erfindungsgemäß hergestellten Lacke (Beispiele 1b, 2b, 3b) weisen gegenüber den Vergleichslacken, die mit kommerziellem Titandioxidpigment und zusätzlich 6 Gew.-% kommerziellem Mattierungsmittel hergestellt wurden (Vergleichsbeispiele 2, 3) einen höheren Mattierungsgrad (geringerer Glanz) und eine geringere Viskosität (KE-Viskosität) auf. Gegenüber dem mit kommerziellem Titandioxid hergestellten, glänzenden Lack, der kein Mattierungsmittel beinhaltet (Vergleichsbeispiel 1), weisen die erfindungsgemäß hergestellten Mattlacke (Beisp. 1b, 2b, 3b) keinen signifikanten Anstieg der Viskosität auf (KE-Viskosität).

## Patentansprüche

1. Mattierungsmittel zur Herstellung von pigmentierten matten Oberflächen umfassend Agglomerate von anorganischen Pigmentpartikeln, **dadurch gekennzeichnet, dass** die anorganischen Pigmentpartikel eine mittlere Partikelgröße d50 von 100 bis 1000 nm, bevorzugt von 200 bis 500 nm aufweisen,
die Agglomerate eine mittlere Agglomeratgröße d50 von 2 bis 200 µm, bevorzugt 2 bis 100 µm, besonders bevorzugt 2 bis 50 µm und am bevorzugtesten 2 bis 20 µm und eine spezifische Oberfläche (BET) von 5 bis 50 m²/g aufweisen.

2. Mattierungsmittel nach Anspruch 1, **dadurch gekennzeichnet, dass** die anorganischen Pigmentpartikel ein Metallsalz sind.

3. Mattierungsmittel nach Anspruch 2, **dadurch gekennzeichnet, dass** das Metallsalz ein Metalloxid ist.

4. Mattierungsmittel nach einem oder mehreren der Ansprüche 1 bis 3, **dadurch gekennzeichnet, dass**
das Metalloxid Titandioxid ist; und/oder
das Titandioxid ausgewählt ist aus der Gruppe bestehend aus unbehandeltem Titandioxid-Pigment, nachbehandeltem nicht-mikronisierten Titandioxid-Pigment, Titandioxid-Fertigpigment und Mischungen davon; und/oder die Agglomerate eine spezifische Oberfläche (BET) von 10 bis 30 m²/g, bevorzugt 11 bis 25 m²/g und besonders bevorzugt 13 bis 20 m²/g aufweisen; und/oder die Agglomerate einen Ölabsorptionswert gemessen nach DIN ISO 787 Teil 5 von 15 bis 25 g/100g, bevorzugt von 17 bis 22 g/100g aufweisen.

5. Verfahren zur Herstellung eines Mattierungsmittels umfassend Agglomerate von anorganischen Pigmentpartikeln, **dadurch gekennzeichnet, dass**
die anorganischen Pigmentpartikel, die eine mittlere Partikelgröße d50 von 100 bis 1000 nm, bevorzugt von 200 bis 500 nm aufweisen, mittels Granulieren, Sintern, Formpressen oder Dispergieren mit anschließendem Trocknen agglomeriert werden, bevorzugt mittels Dispergieren mit anschließendem Trocknen.

6. Verfahren nach Anspruch 5, **dadurch gekennzeichnet, dass**
das Dispergieren der anorganischen Pigmentpartikel in einer Rührwerkskugelmühle durchgeführt wird, um eine Dispersion zu erhalten, und/oder
das Trocknen der Dispersion mittels Sprühtrocknen durchgeführt wird.

7. Verfahren nach Anspruch 5 oder 6 **dadurch gekennzeichnet, dass**
beim Dispergieren mindestens ein Bestandteil ausgewählt aus der Gruppe bestehend aus Wasser, organischem Lösungsmittel und Dispergierungsmittel eingesetzt wird.

8. Verfahren nach Anspruch 5 bis 7 **dadurch gekennzeichnet, dass**
die anorganischen Pigmentpartikel ein Metallsalz, bevorzugt ein Metalloxid und noch bevorzugter Titandioxid sind; und/oder
das Titandioxid ausgewählt ist aus der Gruppe bestehend aus unbehandeltem Titandioxid-Pigment, nachbehandeltem nicht-mikronisierten Titandioxid-Pigment, Titandioxid-Fertigpigment und Mischungen davon.

9. Beschichtungsformulierung zur Herstellung von pigmentierten matten Oberflächen **dadurch gekennzeichnet, dass**
die Formulierung ein Mattierungsmittel nach einem oder mehreren der Ansprüche 1 bis 4 umfasst.

10. Beschichtungsformulierung nach Anspruch 9 **dadurch gekennzeichnet, dass** die Formulierung nicht-agglomerierte anorganische Pigmentpartikel umfasst ausgewählt aus der Gruppe bestehend aus unbehandeltem Titandioxid-Pigment, nachbehandeltem nicht-mikronisierten Titandioxid-Pigment, Titandioxid-Fertigpigment und Mischungen davon.

11. Beschichtungsformulierung nach Anspruch 9 oder 10 **dadurch gekennzeichnet, dass** die Formulierung kein zusätzliches Mattierungsmittel umfasst; und/oder
die Formulierung kein zusätzliches nicht-agglomeriertes Pigment umfasst; und/oder die Formulierung mindestens einen Bestandteil umfasst ausgewählt aus der Gruppe bestehend aus Bindemittel, Entschäumer, Dispergiermittel, Füllstoff, Lösungsmittel, Konservierungsmittel, Filmhilfsmittel und Rheologiehilfsmittel.

12. Pigmentierte matte Oberfläche eines Substrats, **dadurch gekennzeichnet, dass** die Oberfläche mit einer Beschichtungsformulierung nach einem oder mehreren der Ansprüche 9 bis 11 beschichtet ist.

13. Kunststoff umfassend ein Mattierungsmittel, **dadurch gekennzeichnet, dass** der Kunststoff ein Mattierungsmittel nach einem oder mehreren der Ansprüche 1 bis 4 umfasst.

14. Verwendung von Agglomeraten von anorganischen Pigmentpartikeln zur Mattierung von pigmentierten Beschichtungen **dadurch gekennzeichnet, dass**
die anorganischen Pigmentpartikel eine mittlere Partikelgröße d50 von 100 bis 1000 nm, bevorzugt von 200 bis 500 nm aufweisen,
die Agglomerate eine mittlere Agglomeratgröße d50 von 2 bis 200 µm, bevorzugt 2 bis 100 µm, besonders bevorzugt 2 bis 50 µm und am bevorzugtesten 2 bis 20 µm und eine spezifische Oberfläche (BET) von 5 bis 50 m²/g aufweisen.

## Claims

1. Matting agent for preparing pigmented mat surfaces comprising agglomerates of inorganic pigment particles, **characterized in that**
the inorganic pigment particles have an average particle size d50 of from 100 to 1000 nm, preferably from 200 to 500 nm,
said agglomerates have an average agglomerate size d50 of from 2 to 200 µm, preferably from 2 to 100 µm, more preferably from 2 to 50 µm, and most preferably from 2 to 20 µm, and a specific surface (BET) of from 5 to 50 m²/g.

2. Matting agent according to claim 1, **characterized in that**
said inorganic pigment particles are a metal salt.

3. Matting agent according to claim 2, **characterized in that**
said metal salt is a metal oxide.

4. Matting agent according to one or more of claims 1 to 3, **characterized in that**
the metal oxide is titanium dioxide; and/or
the titanium dioxide is selected from the group consisting of untreated titanium dioxide pigment, aftertreated non-micronized titanium dioxide pigment, ready-made titanium dioxide pigment, and mixtures thereof; and/or
the agglomerates have a specific surface (BET) of from 10 to 30 m²/g, more preferably from 11 to 25 m²/g, and most preferably from 13 to 20 m²/g; and/or
the agglomerates have an oil absorption value as measured according to DIN ISO 787 Part 5 of 15 to 25 g/100 g, preferably 17 to 22 g/100 g.

5. Method for obtaining a matting agent comprising agglomerates of inorganic pigment particles, **characterized in that** said inorganic pigment particles are agglomerated by granulating, sintering, compression molding, or dispersing followed by drying, preferably by means of dispersing followed by drying.

6. Method according to claim 5, **characterized in that**
the dispersing of the inorganic pigment particles is performed in an agitator bead mill to obtain a dispersion; and/or
the drying of the dispersion is performed by spray-drying.

7. Method according to claim 5 or 6, **characterized in that**
at least one component selected from the group consisting of water, organic solvent and dispersant is employed in the dispersing step.

8. Method according to claim 5 to 7, **characterized in that**
said inorganic pigment particles are selected from the group consisting of untreated titanium dioxide pigment, aftertreated non-micronized titanium dioxide pigment, ready-made titanium dioxide pigment, and mixtures thereof.

9. Coating formulation for producing pigmented mat surfaces, **characterized in that**
said formulation comprises a matting agent according to one or more of claims 1 to 4.

10. Coating formulation according to claim 9, **characterized in that**
said formulation comprises non-agglomerated inorganic pigment particles selected from the group consisting of untreated titanium dioxide pigment, aftertreated non-micronized titanium dioxide pigment, ready-made titanium dioxide pigment, and mixtures thereof.

11. Coating formulation according to claim 9 or 10, **characterized in that**
said formulation does not contain any additional matting agent; and/or
said formulation does not comprise any additional non-agglomerated pigment; and/or said formulation comprises at least one component selected from the group consisting of a binder, defoamer, dispersant, filler, solvent, preservative, auxiliary film forming agent, and rheology additive.

12. Pigmented mat surface of a substrate, **characterized in that** said surface is coated with a coating formulation according to one or more of claims 9 to 11.

13. Plastic comprising a matting agent, **characterized in that** said plastic comprises a matting agent according to one or more of claims 1 to 4.

14. Use of agglomerates of inorganic pigment particles for matting pigmented coatings, **characterized in that**
the inorganic pigment particles have an average particle size d50 of from 100 to 1000 nm, preferably from 200 to 500 nm,
said agglomerates have an average agglomerate size d50 of from 2 to 200 µm, preferably from 2 to 100 µm, more preferably from 2 to 50 µm, and most preferably from 2 to 20 µm, and a specific surface (BET) of from 5 to 50 m²/g.

## Revendications

1. Agent de matité pour la fabrication de surfaces mates pigmentées comprenant des agglomérés de particules de pigment anorganiques, **caractérisé en ce que** les particules de pigment anorganiques présentent une grandeur de particule médiane d50 de 100 à 1 000 nm, de préférence de 200 à 500 nm,
les agglomérés présentent une grandeur d'aggloméré médiane d50 de 2 à 200 µm, de préférence de 2 à 100 µm, de manière particulièrement préférée de 2 à 50 µm et de manière préférée entre toutes de 2 à 20 µm et une surface spécifique (BET) de 5 à 50 m²/g.

2. Agent de matité selon la revendication 1, **caractérisé en ce que** les particules de pigment anorganiques sont un sel métallique.

3. Agent de matité selon la revendication 2, **caractérisé en ce que** le sel métallique est un oxyde métallique.

4. Agent de matité selon l'une ou plusieurs des revendications 1 à 3, **caractérisé en ce que**
l'oxyde métallique est du dioxyde de titane ; et/ou
le dioxyde de titane est sélectionné à partir du groupe se composant d'un pigment de dioxyde de titane non traité, d'un pigment de dioxyde de titane non micronisé retraité, d'un pigment fini de dioxyde de titane et de mélanges de ceux-ci ; et/ou les agglomérés présentent une surface spécifique (BET) de 10 à 30 m²/g, de préférence de 11 à 25 m²/g et de manière particulièrement préférée de 13 à 20 m²/g ; et/ou
les agglomérés présentent une valeur d'absorption d'huile mesurée selon DIN ISO 787 partie 5 de 15 à 25 g/100 g, de préférence de 17 à 22 g/100 g.

5. Procédé de fabrication d'un agent de matité comprenant des agglomérés de particules de pigment anorganiques, **caractérisé en ce que**
les particules de pigment anorganiques qui présentent une grandeur de particule médiane d50 de 100 à 1 000 nm, de préférence de 200 à 500 nm, sont agglomérées par granulation, frittage, pressage par formage ou dispersion avec séchage consécutif, de préférence par dispersion avec séchage consécutif.

6. Procédé selon la revendication 5, **caractérisé en ce que**
la dispersion des particules de pigment anorganiques est réalisée dans un broyeur agitateur à boulets afin de recevoir une dispersion, et/ou
le séchage de la dispersion est réalisé par séchage par pulvérisation.

7. Procédé selon la revendication 5 ou 6, **caractérisé en ce que**
au moins un constituant sélectionné à partir du groupe se composant d'eau, d'un solvant organique et d'un moyen de dispersion est utilisé lors de la dispersion.

8. Procédé selon les revendications 5 à 7, **caractérisé en ce que**
les particules de pigment anorganiques sont un sel métallique, de préférence un oxyde métallique et de manière davantage préférée du dioxyde de titane ; et/ou le dioxyde de titane est sélectionné à partir du groupe se composant d'un pigment de dioxyde de titane non traité, d'un pigment de dioxyde de titane non micronisé retraité, d'un pigment fini de dioxyde de titane et de mélanges de ceux-ci.

9. Formulation de revêtement pour la fabrication de surfaces mates pigmentées, **caractérisée en ce que**
la formulation comporte un agent de matage selon l'une ou plusieurs des revendications 1 à 4.

10. Formulation de revêtement selon la revendication 9, **caractérisée en ce que** la formulation comporte des particules de pigment anorganiques non agglomérées sélectionnées à partir du groupe se composant d'un pigment de dioxyde de titane non traité, d'un pigment de dioxyde de titane non micronisé retraité, d'un pigment fini de dioxyde de titane, et de mélanges de ceux-ci.

11. Formulation de revêtement selon la revendication 9 ou 10, **caractérisée en ce que** la formulation ne comporte aucun agent de matage supplémentaire ; et/ou la formulation ne comporte aucun pigment non aggloméré supplémentaire ; et/ou la formulation comporte au moins un constituant sélectionné à partir du groupe se composant d'un liant, d'un antimousse, d'un moyen de dispersion, d'une substance de remplissage, d'un solvant, d'un moyen de conservation, d'un moyen auxiliaire de film et d'un moyen auxiliaire de rhéologie.

12. Surface mate pigmentée d'un substrat, **caractérisée en ce que** la surface est revêtue avec une formulation de revêtement selon l'une ou plusieurs des revendications 9 à 11.

13. Matière plastique comprenant un agent de matité, **caractérisée en ce que** la matière plastique comporte un agent de matité selon l'une ou plusieurs des revendications 1 à 4.

14. Utilisation d'agglomérés de particules de pigment anorganiques pour le matage de revêtements pigmentés, **caractérisée en ce que**
les particules de pigment anorganiques présentent une grandeur de particules médiane d50 de 100 à 1 000 nm, de préférence de 200 à 500 nm,
les agglomérés présentent une grandeur d'aggloméré médiane d50 de 2 à 200 µm, de préférence de 2 à 100 µm, de manière particulièrement préférée de 2 à 50 µm et de manière préférée entre toutes de 2 à 20 µm et une surface spécifique (BET) de 5 à 50 m²/g.
